# DEMANDE DE BREVET EUROPEEN

(11) **EP 4 449 865 A1**
(43) Date de publication de la demande: **23.10.2024**
(21) Numéro de dépôt: 24170264.6
(22) Date de dépôt: 15.04.2024
(51) Int. Cl.: A01N 37/16, A01P 1/00

(54) **DES GELS STABLES FAIBLEMENT DOSÉS EN ACIDE PERACÉTIQUE POUR L' APPLICATION D'UN TRAITEMENT BIOCIDE SUR LES SURFACES**

(30) Priorité: 19.04.2023 FR 2303902
(71) Demandeur: SETS solution, 30390 Aramon (FR)
(72) Inventeur: FRANC, Cécile, 30390 ARAMON (FM)

(57) **Abrégé**

L'invention concerne un gel homogène, stable, à base aqueuse, présentant à t0 une viscosité dynamique d'au moins 3.0 Pa.s sous un cisaillement de1s⁻¹ possédant un pH apparent compris entre 3 et 6, et caractérisé en ce qu'il comprend :
- Entre 0.5 et 6% en masse par rapport à la masse totale du gel d'un ou d'un mélange de viscosant(s) organique(s)
- Entre 0.01% et 0.5% en masse par rapport à la masse totale du gel d'acide peracétique
- Entre 0.3% et 3% en masse par rapport à la masse totale du gel de caséine Présentant une stabilité en APA dans le temps d'au moins deux mois.

L'invention concerne également un procédé d'ajustement du pH de ces gels stables et leur utilisation pour des traitements biocides.

Le gel selon l'invention comprenant environ 0.020% d'APA est particulièrement utile pour le traitement des surfaces en pierre, et plus particulièrement pour les sculptures en calcaires.

## Description

La présente invention vise un gel nouveau et stable possédant un pH apparent entre 3 et 6 comprenant de l'acide peracétique (APA), un viscosant organique et de la caséine. Elle concerne également le procédé d'ajustement du pH d'un tel gel et l'utilisation d'un de ces gels comme nettoyant et biocide dans le domaine de la désinfection, dans le domaine de l'entretien et de l'hygiène. Ils sont en particulier adaptés à une utilisation pour les traitements biocides en extérieur. Ils sont conçus pour pouvoir être utilisés pour le traitement des monuments et statues en pierres dans les jardins. La présente invention concerne également l'utilisation de ces gels comme biocide préventif après une action manuelle de démoussage ou de désherbage.

Il existe peu de substances actives biocides présentant un spectre d'action complet (virucide, bactéricide, fongicide et sporicide). L'activité sporicide est cependant une propriété requise pour les applications en extérieur. Il existe par ailleurs un besoin pour un produit qui fonctionne en présence de souillures complexes (pollutions atmosphériques contenant des résidus organiques, inorganiques, métalliques - Cu, Zn, Pb). Enfin, il existe un besoin pour un produit ou une famille de produit qui ne disperse pas de substance biocide dans l'environnement, pas plus que de substances dangereuses.

Les hypochlorites sont des biocides complets. Cependant, on sait que de nombreux supports ne peuvent être traités avec cette substance. (1) la plupart des métaux au contact des hypochlorites sont oxydés ; (2) les ions chlorures sont responsables de dégradation à long terme par pénétration et action sur les structures métalliques ; (3) la génération de chlorure de sodium ou sel de cuisine est nuisible pour les pierres.

Les ammoniums quaternaires sont beaucoup utilisés mais ils présentent le désavantage de persister et de se retrouver dans les sols et les eaux. Ils apportent par ailleurs également leurs contre-ions, des ions chlorures, dans les milieux. Ceux-ci ont souvent une action délétère comme décrit ci-dessus.

Comme décrit dans le document du Centre de Coordination de la Lutte contre les infections Nosocomiales de l'Inter-région Sud-Est 'l'acide peracétique : activités et usage en établissements de santé' du 20/01/2005, l'acide peracétique. présente une activité bactéricide, fongicide, sporicide, virucide à des concentrations faibles, bien que modulées par la température, le pH, la présence ou non d'eau oxygénée et le temps de contact. Par exemple une activité sporicide sur des spores de *Bacillus Subtilis* y est décrite en une heure pour une concentration de 42 ppm (0.0042%) d'APA en présence de 0.56% d'eau oxygénée. L'APA a la particularité d'être un biocide sans résidu toxique. C'est en partie à cause de l'instabilité des solutions diluées en APA que son utilisation reste limitée.

Des solutions diluées à préparer avant utilisation sont commercialisées mais elles comportent des sels solubles incompatibles avec les monuments en pierre.

Des gels oxydants bi-composants autodégradables à base de différents oxydants sont décrits dans le brevet FR 3089753. Cependant, ces types de gels préparés à base d'APA sont écartés car la formation d'un voile blanc a été observée sur les calcaires traités.

Dès lors, il y a un réel besoin de développer une nouvelle formulation de gels à base d'APA compatible avec les pierres, et avec les calcaires en particulier. Par ailleurs, et pour que ce gel puisse être exploité et commercialisé, il nous faut disposer d'un gel stable à base d'APA pendant au moins deux mois.

On entend pour toute la suite du texte par gel stable à base d'APA un gel qui conserve pendant au moins deux mois son homogénéité (ou qui la recouvre aisément après agitation) et un pourcentage en APA de plus de 90% du pourcentage d'APA mesuré juste après préparation. En outre, sa viscosité à deux mois est à minima de 0.1 Pa.s pour un cisaillement de 1s⁻¹.

Ce but, et encore d'autres, sont atteints par la présente invention.

Le premier objet de l'invention concerne un gel homogène, stable, à base aqueuse, présentant à t0 une viscosité dynamique d'au moins 3.0 Pa.s sous un cisaillement de1s⁻¹, ayant un pH apparent compris entre 3 et 6, et caractérisé en ce qu'il comprend :
- Entre 0.5 et 6% en masse par rapport à la masse totale du gel d'un ou d'un mélange de viscosant(s) organique(s)
- Entre 0.01% et 0.5% en masse par rapport à la masse totale du gel d'acide peracétique
- Entre 0.3% et 3% en masse par rapport à la masse totale du gel de caséine

Tous les pourcentages indiqués dans ce document sont des pourcentages massiques exprimés par rapport à la masse totale finale du gel.

On entend par gel une dispersion colloïdale qui présente les propriétés d'un gel physique (présence d'un réseau et comportement viscoélastique).

On entend par gel homogène un gel monophasique qui ne présente pas de grumeaux juste après préparation, soit à t0.

On entend par gel stable un gel qui conserve au moins pendant deux mois son homogénéité (ou qui la recouvre aisément après agitation) et dont la viscosité dynamique à deux mois est à minima de 0.1 Pa.s pour un cisaillement de 1s⁻¹.

Les gels de l'invention doivent avoir une viscosité dynamique à t0 d'au moins 3.0 Pa.s sous un cisaillement de 1s⁻¹. De façon tout à fait surprenante cette propriété est nécessaire mais non suffisante pour assurer la stabilité du gel pendant au moins deux mois.

Le pH apparent du gel est la valeur obtenue par lecture directe avec une électrode en verre ou à l'aide d'un indicateur coloré de papier pH ou encore par toute autre méthode.

Le pH apparent du gel de l'invention est compris entre 3 et 6.

Dans des modes de réalisation, le pH apparent du gel de l'invention est contrôlé par un système tampon pour être maintenu entre 3 et 6. Pour cela on pourra utiliser un mélange acide(s) faible(s)/ sel de(s) l'acide(s). Dans des modes de réalisation l'acide faible comprend de l'acide acétique. Le sel comprendra des ions sodium, calcium, ammonium, magnésium, etc. Il sera préférentiellement à base de calcium et/ou de magnésium.

On pourra également utiliser des mélanges comprenant d'autres acides organiques faibles, comportant une ou plusieurs fonctions carboxyliques. On citera sans que la liste ne soit exhaustive l'acide citrique, l'acide tartrique, etc.

Dans des modes de réalisation une base forte soluble est utilisée pour ajuster le pH, dans une quantité inférieure à 0.02% en masse du gel final, préférentiellement moins de 0.01% en masse du gel final.

Dans des modes de réalisation, le pH du gel peut être ajusté par de l'acide acétique ou de l'oxyde de magnésium ou un mélange des deux.

Dans des modes de réalisation l'oxyde de magnésium comprend de l'hydroxyde de magnésium basique (CAS 39409-82-0).

Dans des modes de réalisation l'oxyde de magnésium comprend de l'hydroxycarbonate de magnésium (CAS 12125-28-9).

Pour toute la suite du document, on entend par viscosant organique un composé ou un mélange de composés organiques qui a la propriété d'augmenter la viscosité d'un mélange aqueux lorsqu'il lui est additionné, et ce pour des concentrations en viscosant comprises entre 0,5 et 6%, préférentiellement entre 0,5 et 4 %, préférentiellement entre 1.5 et 6%, préférentiellement encore entre 1.9 et 6%, préférentiellement encore entre 1.9 et 4%. En outre cet agent viscosant peut être naturel ou synthétique.

Dans des modes de réalisation, les viscosants organiques peuvent être choisis parmi la liste suivante, sans que celle-ci ne soit exhaustive : polyacryliques, polyacrylamides, réticulés ou non, polysaccharides, PEG, et leurs mélanges.

On entend ici et pour toute la suite du texte par polysaccharides l'ensemble des polyosides naturels et leurs dérivés.

Dans des modes de réalisation, le gel de l'invention comprend un ou plusieurs polysaccharides comme viscosant(s) organique(s).

Dans des modes de réalisation, le ou les polysaccharides est (sont) choisi(s) parmi la cellulose et ses dérivés, l'hémicellulose et ses dérivés, la chitine et ses dérivés, l'agar-agar et ses dérivés, le carraghénane et ses dérivés, la pectine, les gommes (de xanthane, de guar) et leurs sels de sodium, de potassium, et de calcium, le xanthane, l'amidon et ses dérivés, la dextrine et leurs mélanges.

Dans des modes de réalisation, la cellulose et ses dérivés comprennent, et sans que cette liste ne soit exhaustive, de la cellulose, de la cellulose microcristalline, de l'hydroxypropylcellulose, de l'hydroxyéthylcellulose, de la carboxyméthylcellulose, de la carboxymethylcellulose sodique et leurs mélanges.

Dans des modes de réalisation, on choisira des mélanges de cellulose microcristalline et de gomme de cellulose. De préférence ces mélanges seront stables pour des pH de 3 à 10.

Dans des modes de réalisation le gel de l'invention comprend entre 1.9% et 4% d'un mélange de cellulose microcristalline et de gomme de cellulose.

On entend par gomme de cellulose la carboxyméthylcellulose ou son dérivé sodique ou le mélange des deux.

Dans des modes de réalisation on choisira des mélanges qui comprennent de la cellulose et de l'hydroxyethylcellulose.

On entend par acide peracétique le composé désigné par le n° cas 79-21-0.

Dans des modes de réalisation l'acide peracétique est présent à des concentrations suffisamment limitées pour que le gel ne soit pas classé comme peroxyde organique ; l'APA est donc présent dans le gel de l'invention à des concentrations comprises entre 0,005% et 1%, préférentiellement à des concentrations comprises entre 0,01% et 0,5%, préférentiellement à des concentrations comprises entre 0.01% et 0.2%, préférentiellement encore à des concentrations comprises entre 0.01 et 0.1%, préférentiellement à des concentrations comprises entre 0.01 et 0.04%, préférentiellement encore à des concentrations comprises entre 0.01 et 0.03%.

Dans des modes de réalisation, des solutions comprenant de l'APA sont ajoutées dans une préparation gélifiée.

On entend par préparation gélifiée une dispersion colloïdale qui présente les propriétés d'un gel physique (présence d'un réseau et comportement viscoélastique).

Dans des modes de réalisation, une solution d'APA commercial, fraichement diluée est ajoutée à une préparation gélifiée.

On peut citer, et sans que cette liste ne soit exhaustive, plusieurs sources commerciales d'APA : Acidofoam CF, Contec Peridox RTU, Peracetique 2% Hydra, Anios 1000, Anios twin, Sanitol détachant.

Dans des modes de réalisations, l'APA présent dans le gel de l'invention a été généré in situ.

Dans des modes de réalisation la solution contenant de l'APA est ajoutée dans la préparation gélifiée après avoir été produite in situ.

Dans des modes de réalisation l'acide peracétique est généré in situ dans le gel de l'invention.

L'acide peracétique peut être généré in situ de différentes façons. On citera par exemple et sans que cette liste ne soit exhaustive : réaction d'eau oxygénée et/ou de percarbonate de sodium avec un précurseur d'acide peracétique.

On entend par précurseur d'acide peracétique toute molécule qui, sous l'action d'eau oxygénée à 5%, et/ou à 12% et/ou à 30% génère de l'acide peracétique.

Dans des modes de réalisation le précurseur d'acide peracétique est contenu dans la préparation gélifiée.

Dans des modes de réalisation, l'APA est ajouté à une préparation gélifiée après avoir été produit in situ à partir d'un précurseur d'acide peracétique et d'eau oxygénée.

Dans des modes de réalisation, l'APA est généré in situ par ajout d'eau oxygénée sur une préparation gélifiée contenant déjà le précurseur d'acide peracétique. La proportion de précurseur par rapport au gel final est de 0,1 à 3%, préférentiellement de 0,1% à 0,5%, préférentiellement de 0,1% à 0,33%.

Dans des modes de réalisation, l'APA est généré in situ par ajout d'un ou plusieurs précurseurs d'acide peracétique sur une préparation gélifiée contenant de l'eau oxygénée. Ce précurseur est présent à des concentrations allant de 0,1 à 2%, préférentiellement de 0,1% à 0,5%, préférentiellement de 0,1% à 0,33%.

Dans des modes de réalisation le précurseur d'acide peracétique est de l'acide acétique, de la triacétine ou 1.3 diacetyloxypropane-2-ylacetate (cas 102-76-1), de la tétraacétyldiamine (cas 10543-57-4)), de l'acétylcaprolactame (cas 1888-91-1).

Dans des modes de réalisation le précurseur d'acide peracétique comprend du triethylcitrate (cas 77-93-0).

De façon préférée le précurseur d'acide peracétique est de la triacétine.

Dans des modes de réalisation la triacétine est introduite dans le gel à des concentrations allant de 0.1 à 5%, préférentiellement à des concentrations de 0.8 à 2% (en masse par rapport à la masse totale du gel final)

Dans des modes de réalisation la solution contenant de l'APA est générée in situ par ajout de triacétine à une solution comprenant de l'eau oxygéné à 34.9% avant d'être ajouté à une préparation gélifiée.

Dans des modes de réalisation la solution contenant de l'APA est générée in situ par ajout de triacétine à une solution comprenant de l'eau oxygéné à 12% avant d'être ajouté à une préparation gélifiée.

Dans des modes de réalisation la température lors de la formation d'APA in situ est comprise entre 12 et 30°C, préférentiellement entre 15 et 25°C.

Dans des modes de réalisation l'APA est généré in situ dans le gel en présence de triacétine et d'H2O2 à 5% ou d'H2O2 à 12%.

Dans des modes de réalisation et lorsque le gel comprend de l'eau oxygénée, sa concentration en APA peut être 'régénérée' par rajout d'un précurseur d'APA dans le gel au bout de 2 mois, préférentiellement au bout de 4 mois, préférentiellement au bout de 6 mois. Le prolongement de la durée d'utilisation des gels de cette façon constitue encore un avantage de l'invention.

Dans des modes de réalisation on rajoutera ainsi au gel de 0.8 à 2 % de triacétine.

La caséine est un liant utilisé par les restaurateurs de monuments historiques dans les compresses qui permet une moindre pénétration dans les calcaires. Il est tout à fait surprenant, et c'est l'un des objets de l'invention, que la caséine puisse coexister avec de l'APA au sein d'un gel.

La caséine est introduite dans la préparation gélifiée. Elle est présente dans le gel de l'invention à des concentrations comprises entre 0.1 et 5%, préférentiellement à des concentrations comprises entre 0.3 et 3%, préférentiellement encore entre 0.3 et 2%, préférentiellement entre 0.5 et 1%.

De façon tout à fait surprenante, alors que les solutions diluées d'acide peracétique (entre 0.01 et 0.12%) sont connues pour être stables entre 7 et 15 jours, les gels de l'invention présentant des concentrations diluées en acide peracétique ont démontré des stabilités d'au moins deux mois, voire de 4 mois, voire de 6 mois et plus. Le premier point surprenant est la persistance de l'APA dans le temps. Le second point concerne la persistance de l'organisation du mélange sous forme de gel.

Dans des modes de réalisation le gel comprend en outre de l'eau oxygénée, préférentiellement entre 0.5 % et 15%, préférentiellement entre 0.5 et 12%, préférentiellement encore entre 0.5 et 5%, préférentiellement entre 1 et 5%, préférentiellement entre 3 et 5%.

Dans des modes de réalisation cette proportion en eau oxygénée dans le gel sera comprise entre 11 et 12%

Dans des modes de réalisation cette proportion en eau oxygénée dans le gel sera comprise entre 4 et 5%

Dans des modes de réalisation l'eau oxygénée est stabilisée.

Dans des modes de réalisation les stabilisants de l'eau oxygénée sont du disodium pyrophosphate, de l'acide phosphorique et du nitrate d'ammonium et leurs mélanges.

Dans des modes de réalisation l'eau oxygénée introduite est stabilisée par de l'urée.

Dans des modes de réalisation, le gel de l'invention comprend en outre entre 1 et 3% d'urée ; l'urée peut être amenée dans le mélange comme stabilisant d'eau oxygénée ou comme un constituant propre. L'urée présente dans le gel contribue à la stabilisation de l'APA présent dans le gel.

La vitesse d'action des gels de l'invention peut être modulée en fonction de leur composition, et de leurs proportions en agent organique ou en agent minéral.

De façon à moduler l'affinité du gel pour son support, des composants minéraux peuvent être ajoutés dans le gel.

Dans des modes de réalisation, ces composants minéraux ne seront pas solubles à un pH de 6 ou supérieur à 6.

Dans des modes de réalisation, les gels de l'invention comprendront de l'alumine.

Dans des modes de réalisation les gels de l'invention contiendront jusqu'à 4% de boehmite.

Dans des modes de réalisation la boehmite comprend jusqu'à 3%, préférentiellement jusqu'à 1 % d'acide nitrique.

Dans des modes de réalisation, le gel de l'invention comprend également jusqu'à 2% d'un tensioactif non ionique, préférentiellement entre 0.1 et 1%, préférentiellement entre 0.2% et 0.8% préférentiellement encore entre 0.1 et 0.2%.

On pourra par exemple utiliser un surfactant ou leurs mélanges parmi la liste suivante, sans que celle-ci ne soit exhaustive : de type alkylpolyglucoside ou imidazoline, de type bloc polymère d'oxyde de propylène et d'oxyde d'éthylène comme le surfactant PE6200 (BASF, marques déposées), le surfactant Pantacare 12000 UR (BASF, marques déposées), le surfactant DPE 201 (Lankem, marques déposées), ou un dérivé de sorbitan comme le surfactant Lansurf SMO (Lankem, marques déposées) ou Lansurf SMO 80 (Lankem, marques déposées).

La présence de ce surfactant pourra améliorer les propriétés nettoyantes du gel de l'invention.

De façon tout à fait surprenante, il est possible d'ajouter au gel jusqu'à 10% d'un solvant organique sans perdre les propriétés propres à l'invention ; la présence de cet élément permet en particulier de modifier le caractère nettoyant du gel de l'invention et de moduler sa vitesse de séchage.

Dans des modes de réalisation le ou les solvants organiques sera (seront) choisi(s) parmi des esters, par exemple et sans que cette liste ne soit exhaustive le butyldiglycolacetate, le butylglycolacétate, le glyceroltriacetate, des esters volatils d'acides gras, par exemple et sans que ce ne soit exhaustif l'oléate d'éthyle.

Les gels de l'invention sont préparés en utilisant toute méthode permettant la dispersion des particules dans la (les) phase(s) liquide(s). L'homme de l'art sait utiliser le matériel adapté. De façon préférée, une agitation mécanique est utilisée ; de façon préférée, la caséine puis le viscosant organique ou le mélange de viscosants organiques sont ajoutés à l'eau ; de façon préférée le surfactant est ajouté après le viscosant organique ; de façon préférée l'alumine est ajoutée ensuite. Le solvant est alors ensuite ajouté, ainsi que le ou les précurseurs d'APA. Le pH de la préparation gélifiée ainsi préparée peut être éventuellement ajusté à 6 ou 7 avant l'apport ou la formation d'APA dans le gel. En fonction du temps d'attente avant utilisation et de la nature du matériau traité, le pH du gel sera ou non réajusté au moment de l'utilisation.

Dans des modes de préparation, les préparations gélifiées à base de polysaccharides et de caséine, comprendront en outre de l'eau oxygénée de façon à pouvoir être stockée. De façon préférentielle elles comprendront entre 0.1 et 0.5 % d'eau oxygénée, préférentiellement encore entre 0.1 et 0.2% d'eau oxygénée.

Dans des modes de réalisation le pH du gel juste après préparation est de 6.

Le deuxième objet de l'invention consiste en l'ajustement du pH du gel de l'invention à un pH spécifique juste avant son utilisation en utilisant une base ou un acide.

Dans des modes de réalisation, le gel résultant aura un pH compris entre 6 et 9, préférentiellement entre 6 et 8, préférentiellement encore le pH sera de 7.

Dans des modes de réalisation, le gel résultant aura un pH compris entre 6 et 7 pendant au moins 5 jours, préférentiellement au moins 10 jours.

Dans des modes de réalisation la base utilisée est une base peu soluble à des pH supérieur à 7 et plus soluble à des pH acides (<7).

Dans des modes de réalisation cette base comprend de l'hydroxyde de magnésium basique.

Dans des modes de réalisation cette base comprend de l'hydroxyde de calcium et/ou du carbonate de calcium.

Dans des modes de réalisation l'acide utilisé comprend de l'acide acétique, préférentiellement à 8% dans l'eau.

De façon tout à fait surprenante, à 20°C les cinétiques des réactions acide-base dans le gel sur cette plage de pH sont suffisamment modifiée pour que nous n'observions pas d'échauffement lors de l'ajout de l'acide ou de la base dans le gel de l'invention.

La modulation de ce pH est un élément important puisque celui-ci influe sur l'intensité de l'activité biocide de l'APA.

Le troisième objet de l'invention est l'utilisation des gels de l'invention pour le traitement biocide de surfaces.

Les gels ont des propriétés rhéologiques qui leur permettent de ne pas s'épandre lorsqu'ils sont déversés sur une surface plane et de ne pas s'écouler lorsqu'ils sont appliqués sur une surface inclinée ou verticale. Cette propriété est essentielle pour traiter les surfaces et augmenter significativement les temps de contact par rapport à une solution qui s'épandrait ou qui s'écoulerait.

Les gels sont par ailleurs caractérisés en rhéologie dynamique. Ainsi, pour une application sur une surface verticale satisfaisante à la brosse, ils auront une viscosité pour un cisaillement de 1s⁻¹ de 0,1 Pa.s minimum. Pour une application aisée, la viscosité à un cisaillement de 100s⁻¹ n'excédera pas 0,4 Pa.s. Les viscosités s'entendent à 25°C.

Les gels de traitements peuvent être appliqués au rouleau, au pinceau, à la brosse, au pistolet airless. Ils sont ensuite abandonnés sur la surface le temps nécessaire à leur action (entre 15 minutes et 20 heures).

Dans des modes de réalisation ils sont rincés, à l'eau ou à l'eau de chaux diluée en fonction des matériaux.

Dans des modes de réalisation un film se forme au séchage ; il peut ensuite être pelé.

Pour un traitement biocide, il est préconisé de retirer au préalable les parties végétales existantes qui s'élimine aisément. Une couche de gel est appliquée et on laisse ensuite agir entre 4h et 24h. Le résidu est humidifié à l'eau sous faible pression puis on lui applique un brossage doux avant rinçage. Une deuxième application peut être nécessaire pour obtenir le niveau de désinfection attendu et/ou la rémanence souhaitée.

Dans des modes de réalisation, et c'est encore une qualité de l'utilisation des gels de l'invention, aucune reprise de contamination biologique n'a été observée sur les surfaces traitées pendant au moins un an.

Le quatrième objet de l'invention est l'utilisation des gels de l'invention pour le traitement biocide préventif des surfaces désherbées manuellement.

La repousse d'herbe après un désherbage manuel peut être très rapide, de l'ordre d'un ou deux mois. L'utilisation des gels de l'invention pour le traitement de ces surfaces permet d'augmenter de manière significative la période avant repousse.

Le cinquième objet de l'invention est l'utilisation des gels de l'invention pour le traitement des surfaces en pierres.

Dans des modes de réalisation, les encrassements liés à la pollution sont traités par les gels de l'invention.

Dans des modes de réalisation les croutes noires observées sur les surfaces en pierre sont traitées par les gels de l'invention.

Dans des modes de réalisations, et pour le traitement des surfaces en pierre, les gels de l'invention auront un pH, éventuellement ajusté avant utilisation si nécessaire, entre 6 et 9, préférentiellement entre 6 et 7.

Dans des modes de réalisation, les pierres traitées seront des calcaires ou des marbres.

Les figures annexées illustrent l'invention :
[Fig.1], regroupe les photos d'une partie d'une sculpture en calcaire avant et après traitement par le gel de l'invention
[Fig.2], représente une surface en marbre avant et après traitement partiel avec le gel de l'invention.
[Fig.3], regroupe les photos du bas d'un mur avant et après traitement par le gel de l'invention.
La [Fig.4] réunie les photos d'une partie d'une sculpture en calcaire avant traitement et six mois après traitement avec le gel de l'invention.

L'invention sera mieux comprise si on s'en réfère aux exemples qui suivent. La présente description est donnée à titre non limitatif, chaque caractéristique d'un mode de réalisation pouvant être combinée à toute autre caractéristique de tout autre mode de réalisation de manière avantageuse.

Les teneurs en eau oxygénée et en acide peracétique sont déterminées par dosages titrimétriques, réalisés respectivement avec du permanganate de potassium et du thiosulfate de sodium. (D'après rapport Afssaps - décembre 2007-APA) Ces titrations sont réalisées à 19°C.

Les viscosités sont mesurées à 25°C. Elles ont été réalisées avec un rhéomètre A2000 ex (TA instruments, marques déposées).

### EXEMPLE 1 - Gel 15-155 selon l'invention et utilisation pour le traitement biocide d'une sculpture en calcaire.

Dans un réacteur muni d'une agitation mécanique, on charge 1289 g d'eau, 350 mg de soude 30%, 48.7 g de Cellulose Vivapur Cs Wet wipes (J. Rottenmaier & Sohne GMBH, marques déposées), 11.4g de surfactant PE6200 (BASF, marques déposées) et 60.7 g de boehmite. On laisse agiter 1 h. On ajoute 17.2 g de caséine, 70.1 g de butyldiglycolacétate puis le pH est ajusté à 7 avec 2.8 g d'hydroxyde de magnésium basique.

Dans un récipient on place 140 g d'eau oxygénée à 34.9%. On ajoute 3.59 g de triacétine. On agite et on laisse agir 10 minutes à 15°C.

Le mélange oxydant (ligne 118) est ajouté à 250g de préparation gélifiée décrite ligne 117.

On obtient le gel 15-155 décrit ci-dessous :

**[Tableaux 1]**

| | Viscosité, en Pa.s | | | | | pH apparent | % H2O2 | % APA |
|---|---|---|---|---|---|---|---|---|
| t=0 | à 100 s⁻¹ | à 10 s⁻¹ | à 1 s⁻¹ | à 0.1 s⁻¹ | à 0.01 s⁻¹ | 6 | 12.4% | 0.13% |
| | 0.05 | 0.35 | 3.54 | 22.86 | 199.11 | | | |

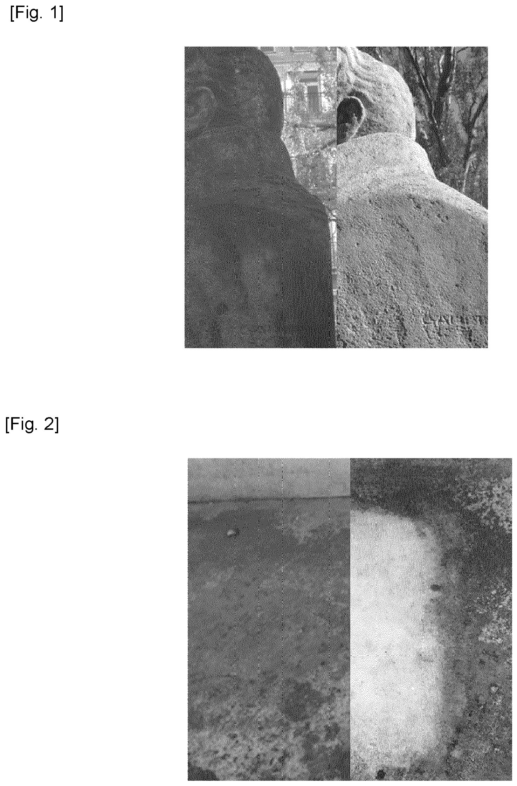

La [Fig.1] présente une partie d'une sculpture avant et après traitement selon les règles de l'art avec le gel 15-155 fraichement préparé.

**[Tableaux 2] Caractéristique du gel 15-155 dans le temps :**

| Temps | T0 | 2 mois |
|---|---|---|
| Aspect | gélifié | Gélifié |
| pH | 6 | 3-4 |
| %APA. | 0.13 | 0.13 |
| %H2O2 | 12.4 | 11.6 |

### EXEMPLE 2 - Procédé selon l'invention de préparation du gel 15-189 à partir du gel 15-155 et utilisation de ce gel pour le traitement d'une surface en marbre.

575 g de gel 15-155 conservé pendant 2 mois sont fluidifiés par une agitation douce. On ajoute 8.86 g de carbonate de magnésium basique (1.52% du gel final). On obtient le gel 15-189.

**[Tableaux 3] Caractéristique du gel 15-189**

| Temps | T0 | 4 jours | 9 jours |
|---|---|---|---|
| Aspect | gélifié | gélifié | gélifié |
| pH | 7 | 7 | 6-7 |
| %APA. | - | - | 0.11% |
| %H2O2 | - | - | 4.74% |

La [Fig.2] présente le détail d'une surface en marbre avant et après traitement avec ce gel.

### EXEMPLE 3 - Gel 16-97 selon l'invention

Dans un réacteur muni d'une agitation mécanique, on charge 2175 g d'eau, 540 mg de soude 30%, 75.6 g de Cellulose Vivapur Cs Wet wipes (J. Rottenmaier & Sohne GMBH, marques déposées), 17.7g de surfactant PE6200 (BASF, marques déposées) et 94,2 g de boehmite. On laisse agiter 1 h. On ajoute 24 g de caséine puis 8.2 g d'eau oxygénée à 34.9%.

Dans un récipient on ajoute à 20°C 7.08 g d'urée à 52 g d'eau oxygénée à 34.9%. Après dissolution on ajoute 3.75 g de triacétine. On agite et on laisse agir 10 minutes à 20°C.

Le mélange oxydant (ligne 130) est ajouté à 290g de préparation gélifiée décrite ligne 129. Le pH est ajusté à 6 avec 17.83 g d'acide acétique à 8% et 1.8 g d'hydroxyde de magnésium basique.

On obtient le gel de l'invention16-97.

**[Tableaux 4]**

| | Viscosité, en Pa.s | | | | | pH apparent | % H2O2 | % APA |
|---|---|---|---|---|---|---|---|---|
| t=0 | à 100 s⁻¹ | à 10 s⁻¹ | à 1 s⁻¹ | à 0.1 s⁻¹ | à 0.01 s⁻¹ | 6 | 4.7% | 0.017% |
| | 0.09 | 0.38 | 3.05 | 30.52 | 174.89 | | | |

Après 2 mois de stockage dans un pot en PEHD à température ambiante, le gel une fois agité est parfaitement homogène et présente les caractéristiques suivantes :

**[Tableaux 5]**

| | Viscosité, en Pa.s | | | | | pH apparent | % H2O2 | % APA |
|---|---|---|---|---|---|---|---|---|
| t=2 mois | à 100 s⁻¹ | à 10 s⁻¹ | à 1 s⁻¹ | à 0.1 s⁻¹ | à 0.01 s⁻¹ | 5 | 4.7% | 0.015% |
| | 0.19 | 0.72 | 1.24 | 10.7 | 150.9 | | | |

### EXEMPLE 4 - Gel 16-43OXY selon l'invention et utilisation pour le nettoyage de façade et le traitement biocide d'une sculpture en calcaire.

Dans un réacteur muni d'une agitation mécanique, on charge 2032 g d'eau, 680 mg de soude 30%, 95 g de Cellulose Vivapur Cs Wet wipes (J. Rottenmaier & Sohne GMBH, marques déposées), 22.23 de surfactant PE6200 (BASF, marques déposées) et 118.4 g de boehmite. On laisse agiter 1 h. On ajoute 37 g de caséine, 154 g de butyldiglycolacétate, 40 g de triacétine puis le pH est ajusté à 7 avec 7.5 g d'hydroxyde de magnésium basique.

Dans un récipient on place 105 g d'eau oxygénée à 34.9%. On ajoute 7.03 g de triacétine. On agite et on laisse agir 10 minutes à 19°C.

500g de préparation gélifiée décrite en ligne 136 est diluée avec 125 g d'eau. On lui ajoute le mélange oxydant décrit en ligne 137. On obtient le gel 16-43 OXY selon l'invention, et décrit ci-dessous.

**[Tableaux 6]**

| | Viscosité, en Pa.s | | | | | pH apparent | % H2O2 | % APA |
|---|---|---|---|---|---|---|---|---|
| t=0 jour | à 100 s⁻¹ | à 10 s⁻¹ | à 1 s⁻¹ | à 0.1 s⁻¹ | à 0.01 s⁻¹ | 6 | 4.9% | 0.019% |
| | 0.08 | 0.41 | 3.68 | 20.58 | 180.42 | | | |

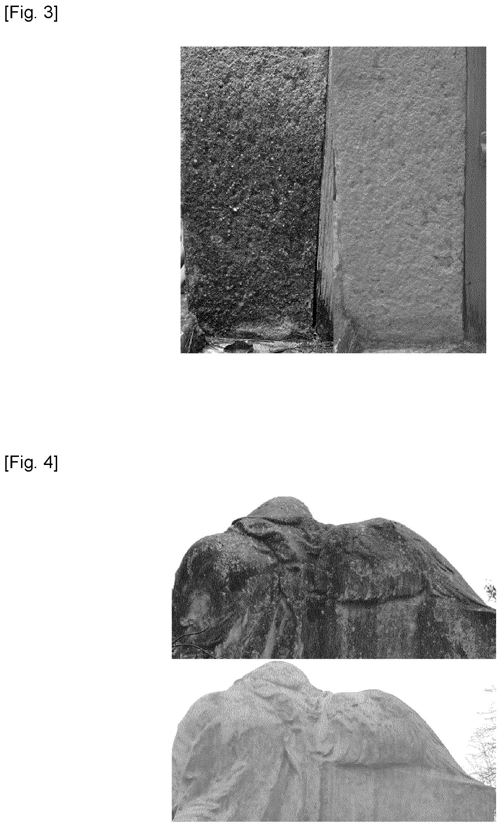

La [Fig.3] réunie les photos du bas d'un mur extérieur avant et après traitement avec ce gel 16-43 OXY.

La [Fig.4] réunie les photos d'une partie d'une sculpture en calcaire avant traitement et six mois après traitement avec ce gel 16-43 OXY.

### EXEMPLE 5 - Gel 17-65A selon l'invention

Dans un réacteur muni d'une agitation mécanique, on charge 605 g d'eau tiède (39°C environ), 7.5g de caséine et 40 g de Cellulose Vivapur Cs Wet wipes (J. Rottenmaier & Sohne GMBH, marques déposées), On laisse agiter 1 h.

Dans un récipient on ajoute à 20°C 2.05g de triacétine à 66 g d'eau oxygénée à 12%. On agite et on laisse agir 10 minutes à 20°C.

Le mélange oxydant (ligne [0144]) est ajouté à 200 g de la préparation gélifiée décrite ligne [0143].

On obtient le gel de l'invention17-65A.

**[Tableaux 7]**

| | Viscosité, en Pa.s | | | | | pH apparent | % H2O2 | % APA |
|---|---|---|---|---|---|---|---|---|
| t=0 | à 100 s⁻¹ | à 10 s⁻¹ | à 1 s⁻¹ | à 0.1 s⁻¹ | à 0.01 s⁻¹ | 5 | 3.1% | 0.029% |
| | 0.40 | 2.41 | 19.55 | 71.93 | 584 | | | |

Après 2 mois de stockage dans un pot en PEHD à température ambiante, le gel une fois agité est parfaitement homogène et présente les caractéristiques suivantes :

**[Tableaux 8]**

| | Viscosité, en Pa.s | | | | | pH apparent | % H2O2 | % APA |
|---|---|---|---|---|---|---|---|---|
| | à 100 s⁻¹ | à 10 s⁻¹ | à 1 s⁻¹ | à 0.1 s⁻¹ | à 0.01 s⁻¹ | | | |
| t=2 mois | 0.13 | 1.30 | 7.05 | 69.10 | 971 | 4 | 3.0% | 0.027% |

### EXEMPLE 6 - Gel 17-63 selon l'invention

Dans un récipient on ajoute à 20°C 40 g d'eau oxygénée à 34.9% à 81 g d'acide acétique 8%. On agite et on laisse agir 10 minutes à 20°C.

Le mélange oxydant (ligne [0151]) est ajouté à 200g de la préparation gélifiée décrite ligne [0143].

On obtient le gel de l'invention 17-63.

**[Tableaux 9]**

| | Viscosité, en Pa.s | | | | | pH apparent | % H2O2 | % APA |
|---|---|---|---|---|---|---|---|---|
| t=0 | à 100 s⁻¹ | à 10 s⁻¹ | à 1 s⁻¹ | à 0.1 s⁻¹ | à 0.01 s⁻¹ | 4 | 4.1% | 0.032% |
| | 0.18 | 0.95 | 9.53 | 63 | 740 | | | |

Après 2 mois de stockage dans un pot en PEHD à température ambiante, le gel une fois agité est parfaitement homogène et présente les caractéristiques suivantes :

**[Tableaux 10]**

| | Viscosité, en Pa.s | | | | | pH apparent | % H2O2 | % APA |
|---|---|---|---|---|---|---|---|---|
| t=2 mois | à 100 s⁻¹ | à 10 s⁻¹ | à 1 s⁻¹ | à 0.1 s⁻¹ | à 0.01 s⁻¹ | 4 | 4.0% | 0.029% |
| | 0.08 | 0.79 | 3.58 | 17.98 | 132.6 | | | |

### EXEMPLE 7 - Gel 17-67 pour comparaison

Dans un réacteur muni d'une agitation mécanique, on charge 200 g d'eau tiède (environ 38°C) et 4.9 g de carboxymethylcellulose (CMC Saporepuro, marques déposées). On laisse agiter 1 h puis on ajoute encore 3 g de caséine.

Dans un récipient on ajoute à 20°C 2 g de triacétine à 66 g d'eau oxygénée à 12%. On agite et on laisse agir 10 minutes à 20°C.

Le mélange oxydant (ligne [0159]) est ajouté à la préparation gélifiée décrite ligne [0158].

On obtient le gel 17-67

**[Tableaux 11]**

| | Viscosité, en Pa.s | | | | | pH apparent | % H2O2 | % APA |
|---|---|---|---|---|---|---|---|---|
| t=0 | à 100 s⁻¹ | à 10 s⁻¹ | à 1 s⁻¹ | à 0.1 s⁻¹ | à 0.01 s⁻¹ | 6 | 2.9% | 0.030 |
| | 1.45 | 6.56 | 23.02 | 59.09 | 119.11 | | | |

Après 2 mois de stockage dans un pot en PEHD à température ambiante, le gel est complétement liquide et présente les caractéristiques suivantes :

**[Tableaux 12]**

| | Viscosité, en Pa.s | | | | | pH apparent | % H2O2 | % APA |
|---|---|---|---|---|---|---|---|---|
| t=2 mois | à 100 s⁻¹ | à 10 s⁻¹ | à 1 s⁻¹ | à 0.1 s⁻¹ | à 0.01 s⁻¹ | ND | ND | ND |
| | 0.041 | 0.040 | 0.040 | 0.042 | - | | | |

### EXEMPLE 8 - Préparation 17-64 pour comparaison

Dans un réacteur muni d'une agitation mécanique, on charge 508 g d'eau tiède (environ 38°C), 7.5 g de caséine et 10 g de gomme xanthane (Saporepuro, marques déposées). On laisse agiter 1 h.

Dans un récipient on ajoute à 20°C 40 g d'eau oxygénée à 34.9% à 81 g d'acide acétique 8%. On agite et on laisse agir 10 minutes à 20°C.

Le mélange oxydant (ligne [0167]) est ajouté à 200g de la préparation gélifiée décrite ligne [0166].

On obtient la préparation 17-64 qui est un gel plein de grumeaux.

## Revendications

1. Gel homogène, stable, à base aqueuse, présentant à t0 une viscosité dynamique d'au moins 3.0 Pa.s sous un cisaillement de1s⁻¹, ayant un pH compris entre 3 et 6, et **caractérisé en ce qu'**il comprend :
- Entre 0.5 et 6% en masse par rapport à la masse totale du gel d'un ou d'un mélange de viscosant(s) organique(s)
- Entre 0.01% et 0.5% en masse par rapport à la masse totale du gel d'acide peracétique
- Entre 0.3% et 3% en masse par rapport à la masse totale du gel de caséine

2. Gel selon la revendication précédente pour lequel le(s) viscosant(s) organique(s) comprend(nent) un ou plusieurs polysaccharide(s)

3. Gel selon la revendication 2 où le(s) polysaccharide(s) comprend (nent) de la cellulose et/ou un ou plusieurs de ses dérivés

4. Gel selon l'une des revendications 2 ou 3 où le(s) polysaccharide(s) comprend (nent) entre 1.9% et 4% d'un mélange de cellulose microcristalline et de gomme de cellulose

5. Gel selon l'une des revendications précédentes où l'acide peracétique est généré in situ par un précurseur d'acide peracétique

6. Gel selon la revendication précédente où le précurseur d'acide peracétique comprend de la triacétine

7. Gel selon l'une des revendications précédentes comprenant en outre entre 11 et 12% d"eau oxygénée

8. Gel selon l'une des revendications précédentes comprenant en outre entre 4 et 5% d'eau oxygénée

9. Gel selon l'une des revendications précédentes comprenant en outre entre 1 et 3% d'urée

10. Gel selon l'une des revendications précédentes comprenant en outre de l'acide acétique et de l'oxyde de magnésium

11. Gel selon l'une des revendications précédentes comprenant en outre jusqu'à 4% de boehmite

12. Gel selon l'une des revendications précédentes qui comprend en outre entre 0.1 et 1% d'un tensioactif non ionique

13. Gel selon l'une des revendications précédentes comprenant en outre jusqu'à 10% de solvant organique

14. Procédé d'ajustement du pH d'un gel selon l'une des revendications précédentes avec une base

15. Procédé d'ajustement selon la revendication 14 avec une base comprenant de l'hydroxide de magnésium basique

16. Utilisation des gels décrits dans les revendications 1 à 15 pour le traitement biocide d'une surface

17. Utilisation des gels décrits dans l'une des revendications 1 à 15 pour le traitement de surfaces en pierres

18. Utilisation des gels décrits dans l'une des revendications 1 à 15 pour le traitement de surfaces en calcaires ou en marbre.
